# NEUE EUROPÄISCHE PATENTSCHRIFT

(11) **EP 1 985 676 B2**
(45) Veröffentlichungstag und Bekanntmachung des Hinweises auf die Entscheidung über den Einspruch: **20.03.2019**
(45) Hinweis auf die Patenterteilung: 23.03.2011
(21) Anmeldenummer: 07107166.6
(22) Anmeldetag: 27.04.2007
(51) Int. Cl.: C09J 5/00, C09J 9/00, B05C 5/02, B27G 11/00

(54) **Verfahren zum Verbinden von (Holz-)Bauteilen**
Method for connecting (wooden) components
Procédé de liaison de composants (en bois)

(43) Veröffentlichungstag der Anmeldung: 29.10.2008
(73) Patentinhaber: Henkel Switzerland Operations AG, 5015 Erlensbach (CH)
(72) Erfinder: Wicki, René, 6207 Nottwil (CH); Ksiazek-Stadtbäumer, Siegmund, 6206 Neuenkirch (CH)
(74) Vertreter: Hepp Wenger Ryffel AG

(56) Entgegenhaltungen:
- EP-A- 0 757 232
- EP-A1- 1 025 968
- DE-A1-102004 021 573
- DE-A1-102004 022 232
- FR-A1- 2 802 460
- US-B2- 7 178 896

## Beschreibung

Die vorliegende Erfindung betrifft ein Verfahren zum Verbinden mindestens zweier Bauteile, eine Vorrichtung zum Auftragen von Klebstoff auf ein Bauteil sowie ein Verfahren zum Austauschen und/oder Umrüsten einer bestehenden Vorrichtung, gemäss den Oberbegriffen der unabhängigen Patentansprüche.

Beim Verbinden von Bauteilen mittels Klebstoff ist es insbesondere im konstruktiven Holzbau von essentieller Wichtigkeit, dass der Klebstoff in ausreichender Menge und hinreichender Verteilung auf die Bauteile aufgetragen wird, damit die verbundene Konstruktion eine ausreichende Stabilität gewährleistet.

Es ist bekannt, den Auftrag von Klebstoff auf Bauteile, etwa auf Holzbauteile, optisch zu überwachen. In DE 4305991 A1 ist etwa ein Verfahren zur Überwachung des Leimauftrags dargestellt, bei dem die Überwachung mittels Farbzeilenkameras realisiert wird. Die Farbzeilenkameras werden auf mit Klebstoff beschichtete Keilzinken eines Holzbauteils gerichtet und ermöglichen die Feststellung, welche Bereiche der Keilzinken von Klebstoff bedeckt sind. Die Beschichtung geschieht mit Hilfe einer Auftragekopfes mit Austrittsdüsen. Weitere Details zum Auftragsverfahren sind in diesem Dokument jedoch nicht definiert.

Nachteilig ist hierbei die grossflächige Überwachung des Auftrags. Insbesondere ist keine unmittelbare Lokalisierung einer möglichen Ursache für einen fehlerhaften Auftrag möglich. Weiterhin nachteilig ist die Tatsache, dass die Vorrichtung aufgrund der Kameras und der nötigen Bildverarbeitung baulich sehr aufwändig ist. Weiterhin ist die Kombination aus Kameras und Bildverarbeitung selbst störungsanfällig.

Das Dokument DE 10 2004 021 573 offenbart ein Inline-Kleberüberwachungssystem und ein Verfahren zur Überwachung von Kleberraupen und zur Kantenerkennung. Das Kleberüberwachungssystem enthält als Sensor einen Kamera- oder CCD-Chip.

Im Dokument EP 1 025 968 sind ein Verfahren und eine Einrichtung zur Leimerkennung offenbart. Auch dieses Dokument beschreibt die Leimerkennung mittels einer Kamera.

Es ist daher eine Aufgabe der Erfindung, die Nachteile des Bekannten zu überwinden und insbesondere ein weniger störanfälliges und einfacheres Verfahren bereitzustellen, welches zudem eine unmittelbare Lokalisierung einer möglichen Ursache eines fehlerhaften Auftrages erlaubt.

Erfindungsgemäss wird diese Aufgabe durch ein Verfahren gemäß Anspruch 1 zum Verbinden mindestens zweier Bauteile gelöst, welches die folgenden Schritte umfasst:
a) Auftragen mindestens einer Klebstoffraupe auf mindestens eines der Bauteile mittels einer Auftragseinheit;
b) Überwachung des Auftrags der Klebstoffraupe mittels mindestens einer Photodiode, welche der Klebstoffraupe und/oder der Auftragseinheit zugeordnet ist;
c) Verbinden der Bauteile durch Inkontaktbringen, vorzugsweise Zusammenpressen der Bauteile.

Die Auftragseinheit ist an sich bekannt und kann etwa eine Düse enthalten. Mindestens eine Photodiode ist der mindestens einen Klebstoffraupe und/oder der mindestens einen Auftragseinheit zugeordnet. Insbesondere überwacht die Photodiode die Klebstoffraupe, welche mittels derjenigen Auftragseinheit aufgetragen wurde, dem die Photodiode zugeordnet ist. Vorzugsweise überwacht die Photodiode ausschliesslich den ordnungsgemässen Auftrag dieser einen Klebstoffraupe.

Erfindungsgemäss wird als Klebstoff ein Klebstoff mit einem lumineszierenden Additiv verwendet. Insbesondere kann es sich um ein fluoreszierendes Additiv handeln. Die Photodiode detektiert hierbei die von dem Additiv emittierte elektromagnetische Strahlung, insbesondere sichtbares Licht. Dies gestattet es, die für das Additiv charakteristische Strahlung zu detektieren und sie insbesondere von Störlicht wie etwa Streulicht zu unterscheiden, was zu einer definierteren und sichereren Überwachung des Auftrags führt.

Das erfindungsgemässe Verfahren ermöglicht die unmittelbare Lokalisierung einer möglichen Ursache für einen fehlerhaften Klebstoffauftrag. Fällt beispielsweise eine der Auftragseinheiten aus oder bewirkt sie einen unregelmässigen Auftrag, so wird dies mittels der ihr oder der Klebstoffraupe zugeordneten Photodiode festgestellt. Dies ermöglicht die schnelle und einfache Lokalisierung einer möglichen Fehlerquelle.

Bevorzugt wird die Überwachung des Auftrags direkt nach dem Auftrag und noch vor dem Verbinden der Bauteile durchgeführt, so dass ein frühzeitiges Erkennen einer allfälligen Störung ermöglicht ist.

Es ist selbstverständlich ebenso denkbar, dass eine oder mehrere Photodioden die Klebstoffraupen von jeweils mehreren Auftragseinheiten überwachen. Diese Variante sollte allerdings nur für solche Verbindungsstellen gewählt werden, die vergleichsweise nur geringe Kräfte aufzunehmen haben.

Alternativ oder zusätzlich ist es möglich, dass mehrere der Photodioden eine einzelne Klebstoffraupe überwachen, welche von einer Auftragseinheit aufgetragen wurde. Dadurch kann an betonders kritischen Verbindungsstellen durch eine redundante Überwachung die Qualität des Auftrages mit noch grösserer Sicherheit garantiert werden.

Bei den Bauteilen kann es sich insbesondere um Holzbauteile handeln. Das Verbinden der Bauteile im Verfahrensschritt c) geschieht vorzugsweise durch Zusammenpressen der Bauteile.

Bevorzugt wird die Überwachung des Auftrags kontinuierlich durchgeführt. Unter einer kontinuierlichen Überwachung wird hierbei auch verstanden, dass die Überwachung in regelmässigen oder unregelmässigen Zeitabständen erfolgen kann. Dabei kann die Überwachung für alle Photodioden gleichzeitig, zyklisch oder in einer unregelmässigen Reihenfolge geschehen.

Gemäss einer zusätzlichen Weiterbildung wird der Aufnahmebereich der Photodiode (also die Klebstoffraupe) mit einer Anregungsstrahlung bestrahlt. Unter dem Aufnahmebereich wird hierbei derjenige Raumbereich verstanden, auf den die Photodiode ausgerichtet ist. Bei der Anregungsstrahlung kann es sich insbesondere um UV-Licht handeln.

Besonders bevorzugt ist die Anregungsstrahlung auf den Klebstoff abgestimmt. Insbesondere kann die Anregungsstrahlung in einem oder mehreren Wellenlängenbereichen erfolgen, in dem oder denen das lumineszierende Additiv Strahlung absorbiert, vorzugsweise ein Absorptionsmaximum aufweist.

Weiter bevorzugt ist die Photodiode auf den Klebstoff und/oder die Anregungsstrahlung abgestimmt. Insbesondere kann die Photodiode unter anderem oder ausschliesslich elektromagnetische Strahlung in dem oder den Wellenlängenbereichen detektieren, in dem oder denen das lumineszierende Additiv emittiert.

Vorzugsweise detektiert die Photodiode die elektromagnetische Strahlung, die das Additiv bei oder nach der Bestrahlung mit der Anregungsstrahlung emittiert. Dies garantiert die Überwachung unter sehr wohldefinierten Bedingungen, die unanfällig gegenüber äusseren Einflüssen ist. Weiterhin ist es denkbar, dass die Anregungsstrahlung in ihrer Intensität pulsiert. Durch den Vergleich der detektierten Strahlung bei verschiedenen Intensitäten sind äussere Einflüsse noch effektiver eliminierbar.

Es ist im Rahmen der Erfindung vorstellbar, dass mittels mehrerer Auftragseinheiten voneinander verschiedene Klebstoffe auftragen werden. Alternativ oder zusätzlich können verschiedene Photodioden und/oder verschiedene Anregungsstrahlungen verwendet werden, welche gegebenenfalls in der beschriebenen Weise aufeinander abgestimmt sind.

Erfindungsgemäß gibt mindestens eine Photodiode bei Vorliegen einer irregulären Betriebsbedingung ein Fehlersignal aus, nämlich bei einem vollständig oder teilweise fehlenden Auftrag. Das Fehlersignal kann dabei etwa ein elektrisches Signal sein.

Bevorzugt wird bei Vorliegen eines Fehlersignals ein Warnsignal ausgegeben, welches etwa optischer und/oder akustischer Natur sein kann. Dabei ist es denkbar, dass das Warnsignal bereits dann ausgegeben wird, wenn nur eine einzige Photodiode ein Fehlersignal ausgibt. Alternativ ist es denkbar, dass das Warnsignal nur dann ausgegeben wird, wenn eine vordefinierte Mindestanzahl von Photodioden gleichzeitig oder innerhalb eines vordefinierten Zeitintervalls ein Fehlersignal ausgibt.

Alternativ oder zusätzlich zu dem Warnsignal kann bei Vorliegen des Fehlersignals das Verfahren automatisch unterbrochen werden. Insbesondere kann bei Vorliegen eines Fehlersignals von einer oder mehreren Photodioden das Auftragen durch sämtliche Auftragseinheiten unterbrochen werden. Weiterhin kann das Verbinden der Bauteile unterbrochen werden.

Die Ausgabe eines Warnsignals und die Unterbrechung des Verfahrens garantieren eine qualitativ hochwertige und sichere Verbindung der einzelnen Bauteile miteinander. Insbesondere ermöglichen es diese Massnahmen, dass das Verfahren nicht kontinuierlich durch einen Menschen überwacht werden muss.

Gemäss einer Weiterentwicklung des Verfahrens wird der Klebstoff berührungslos aufgetragen. Dies garantiert einen gleichmässigeren Auftrag und verhindert etwa ein Verstopfen der Auftragseinheit.

Ein weiterer Aspekt der Erfindung betrifft eine Vorrichtung zum Auftragen von Klebstoff auf ein Bauteil. Die Vorrichtung umfasst mindestens eine Auftragseinheit zum Auftragen von Klebstoffraupen auf ein Bauteil sowie mindestens eine Photodiode zur Überwachung des Auftrags der Klebstoffraupe auf das Bauteil sowie Leuchtmittel zur Bestrahlung der Klebstoffraupen, die Strahlung im UV-Bereich emittieren. Erfindungsgemäss ist wenigstens einer Auftragseinheit eine Photodiode zugeordnet.

Insbesondere sind die Auftragseinheit und die Photodiode derart angeordnet, dass die Klebstoffraupe, welche mittels der Auftragseinheit aufgetragen wurde, von der Photodiode detektierbar ist. Bevorzugt ist die Photodiode derart angeordnet, dass sein Aufnahmebereich in vorzugsweise unmittelbarer Nähe der Auftragseinheit liegt. Somit ist ein frühzeitiges Erkennen einer allfälligen Störung ermöglicht.

Bevorzugt handelt es sich bei der Vorrichtung um eine Vorrichtung für das Auftragen von Klebstoff auf Fügeteile und für das Verbinden der Fügeteile. Insbesondere kann es sich um eine Keilzinkenanlage handeln. Bevorzugt sind die Auftragseinheiten und/oder Photodioden innerhalb der Vorrichtung bewegbar. Insbesondere sind sie relativ zu Haltemitteln bewegbar, in welchen ein Bauteil haltbar ist. Die Vorrichtung kann weiterhin Mittel zum Transport der Bauteile und/oder Verbindungseinrichtungen wie etwa Presseinrichtungen enthalten. Insbesondere ist diese Vorrichtung zur Durchführung des erfindungsgemässen Verfahrens zum Verbinden von Bauteilen geeignet.

Es ist denkbar, dass mindestens eine Photodiode derart angeordnet ist, dass die Klebstoffraupen mehrerer Auftragseinheiten in seinem Aufnahmebereich liegen. Somit kann diese Photodiode das Auftragen mehrere Klebstoffraupen überwachen. Diese Variante kann zwecks einer Kostenersparnis und/oder einer baulichen Vereinfachung für solche Verbindungsstellen gewählt werden, die vergleichsweise nur geringe Kräfte aufzunehmen haben.

Alternativ oder zusätzlich ist es möglich, dass eine Gruppe von Photodioden derart angeordnet ist, dass die Klebstoffraupe einer einzelnen Auftragseinheit in jedem ihrer Aufnahmebereiche liegt. Dadurch kann an besonders kritischen Verbindungsstellen durch eine redundante Überwachung die Qualität des Auftrages mit noch grösserer Sicherheit garantiert werden.

Erfindungsgemäß ist mindestens eine der Photodioden derart ausgebildet, dass bei Vorliegen einer irregulären Betriebsbedingung ein Fehlersignal ausgebbar ist, nämlich bei einem fehlenden Auftrag. Das Fehlersignal kann dabei etwa elektrischer Natur sein.

Bevorzugt ist die Vorrichtung aufgrund eines Signals, insbesondere eines Fehlersignals, mindestens einer der Photodioden steuerbar. Besonders bevorzugt ist mindestens eine der Auftragseinheiten, vorzugsweise alle Auftragseinheiten, bei Vorliegen eines Signals vorzugsweise automatisch deaktivierbar. Dies ermöglicht die Unterbrechung des Klebstoffauftrags, sobald eine irreguläre Betriebsbedingung vorliegt. Alternativ oder zusätzlich können aufgrund des Signals die Mittel zum Transport der Bauteile und/oder die Verbindungseinrichtung, insbesondere die Presseinrichtung, deaktiviert werden. Somit wird verhindert, dass Bauteile mit irregulärem Klebstoffauftrag miteinander verbunden werden.

Darüber hinaus ist es denkbar, dass die Vorrichtung eine Warneinrichtung aufweist, welche bei Vorliegen eines Fehlersignals aktivierbar ist. Bei der Warneinrichtung kann es sich beispielsweise um einen Bildschirm, eine Warnleuchte oder eine Sirene handeln.

Die Vorrichtung weist Leuchtmittel auf, mittels deren die Klebstoffraupen bestrahlbar sind. Bei der Durchführung des erfindungsgemässen Verfahrens mit der Vorrichtung kann somit ein Klebstoff mit einem lumineszierenden, insbesondere fluoreszierenden Additiv verwendet werden, der geeignet ist, die elektromagnetische Strahlung der Leuchtmittel zu absorbieren. Dabei können die Leuchtmittel eine oder mehrere Leuchten umfassen. Die Leuchten können jeweils einer Photodiode zugeordnet sein und derart angeordnet sein, dass jeweils nur eine Klebstoffraupe bestrahlbar ist. Insbesondere können eine Photodiode und eine Leuchte sowohl Teil eines integralen Bauteils sein als auch eine integrale Baueinheit bilden. Alternativ kann mindestens eine der Leuchten derart angeordnet sein, dass mehrere Klebstoffraupen bestrahlbar sind. Bei hinreichend langer Abregungszeit des lumineszierenden Additivs, insbesondere bei phosphoreszierenden Additiven, ist es nicht unbedingt erforderlich, dass sich der durch die Leuchten bestrahlte Bereich und der Aufnahmebereich der Photodiode überlappen. Weiterhin ist es bevorzugt, dass die Leuchtmittel innerhalb der Vorrichtung bewegbar sind. Insbesondere können sie relativ zu den Haltemitteln bewegbar sein.

Es ist vorstellbar, dass mittels mehrerer Auftragseinheiten voneinander verschiedene Klebstoffe auftragen werden. Alternativ oder zusätzlich können verschiedene Photodioden und/oder verschiedene Anregungsstrahlungen verwendet werden, welche optional im oben erläuterten Sinne aufeinander abgestimmt sind.

Bevorzugt ist mindestens eine Auftragseinheit derart angeordnet, dass eine Klebstoffraupe berührungslos auf das Bauteil auftragbar ist. Dies garantiert einen gleichmässigeren Auftrag und verhindert etwa ein Verstopfen der Auftragseinheit.

Ein weiterer, nicht erfindungsgemässer Aspekt der Offenbarung betrifft eine insbesondere integrale Baueinheit, die insbesondere für die erfindungsgemässe Vorrichtung zum Auftragen von Klebstoff geeignet ist. Die Baueinheit umfasst
a) mindestens eine Auftragseinheit zum Auftragen von Klebstoffraupen auf ein Bauteil und mindestens eine Photodiode, zur Überwachung des Auftrags der Klebstoffraupe; oder
b) mindestens eine Auftragseinheit zum Auftragen von Klebstoffraupen auf ein Bauteil und Leuchtmittel zur Bestrahlung von Klebstoffraupen, die insbesondere Strahlung im UV-Bereich emittieren; oder
c) Leuchtmittel zur Bestrahlung von Klebstoffraupen, die insbesondere Strahlung im UV-Bereich emittieren, und mindestens eine Photodiode zur Überwachung des Auftrags einer Klebstoffraupe.

Einerseits kann eine derartige Baueinheit zum Austausch einer defekten Baueinheit in einer Vorrichtung verwendet werden. Weiterhin kann die Baueinheit benutzt werden, um eine herkömmliche Vorrichtung zum Auftragen von Klebstoff zu einer erfindungsgemässen Vorrichtung umzurüsten.

Die einzelnen Elemente der oben aufgeführten Varianten können selbstverständlich eine oder mehrere der weiter oben beschriebenen Weiterbildungen aufweisen. Beispielsweise könnte eine Photodiode in einer Baueinheit gemäss einer der Varianten a) oder c) derart ausgebildet sein, dass bei Vorliegen einer irregulären Betriebsbedingung ein Fehlersignal ausgebbar ist.

Darüber hinaus betrifft die Erfindung ein Verfahren zum Austauschen und/oder Umrüsten einer bestehenden Vorrichtung. Erfindungsgemäss umfasst dieses Verfahren das Anbringen mindestens einer Photodiode und eines Leuchtmittels, welches Strahlung um UV-Bereich emittiert, insbesondere durch eine Baueinheit wie vorstehend dargelegt.

Ein weiterer, nicht erfindungsgemässer Aspekt der Offenbarung betrifft einen Klebstoff, insbesondere einen Polyurethan-Klebstoff, enthaltend wenigstens ein, vorzugsweise eine Mischung von zwei oder mehreren lumineszierenden, insbesondere fluoreszierenden Additiven, wobei der Klebstoff eine derartige Viskosität und Standfestigkeit aufweist, dass bei 20 °C und 1013 hPa eine Klebstoffraupe mit einem Durchmesser von 4 mm auf ein ebenes Holzsubstrat auftragbar ist und dort während mindestens 4 Minuten in der Waagerechten im Wesentlichen formstabil lagerbar ist.

Besonders bevorzugt ist das lumineszierende, insbesondere fluoreszierende Additiv mit UV-Strahlung anregbar und emittiert Strahlung im Wellenlängenbereich von 200 nm bis 800 nm, vorzugsweise im Wellenlängenbereich von 300 nm bis 650 nm, besonders bevorzugt im Wellenlängenbereich von 410 nm bis 480 nm.

Geeignete, insbesondere fluoreszierende Additive sind dem Fachmann geläufig (vergl. Ullman's Encyclopedia of Industrial Chemistry Vol. A18 (5th Edition) pp. 153 - 167; hinsichtlich geeigneter Fluoreszenz-Additive in die vorliegende Anmeldung durch Bezugnahme eingeschlossen), bspw. Distyrylbenzene, Distyrylbiphenyl und Divinylstilbene, Triazinylaminostilbene, Benzoxazole wie HASTALUXV KCB (2,2-(1,4-Naphthalenediyl)bis-benzoxazole), die EASTOBRITE® Produktlinie von Eastman Chemical, insbesondere EASTOBRITE® OB-1, (2,2'-(1,2-ethenediyldi-4,1-phenylene)bisbenzoxazole), Stilbenylbenzoxazole und - bis(benzoxazole), Furane und Benzo[b]furane, wie Bis(benzo[b]furan-2-yl)biphenyle und Benzimidazole, wie kationische Benzimidazole, 1,3, Diphenyl-2-pyrazoline, Coumarine, Naphtalimide und 1,3,5-Triazin-2-yl-Derivate, Fluorescein® und *"FLUORESCENT BRIGHTENER 28 FREE ACID fluorescent dye"* (Sigma-Aldrich), Benzoxazol-Derivate wie bspw. Uvitex® OB (2,5-(di-5-tert-butylbenzoyl)thiophenate) (Ciba Specialty Chemicals), Blankophor® CA 4410 (Bayer), Pyrene wie bspw. Aminocoumarin-Konjugate, insbesondere Dialkylaminocoumarinpyrene, z.B. ALEXA FLUOR® 350 (Carbonsäuresuccinimidylester) und AMCA-X Farbstoffe (Succinimidylester), Naphtalinderivate wie z.B. N,N-Dimethylamino-5-propionylnaphthalin, RHODAMINE RED® oder TEXAS RED-X® (Molecular Probes), etc. Ganz besonders bevorzugt ist in diesem Zusammenhang Uvitex® OB (2,5-(di-5-tert-butylbenzoyl)thiophenate) (Ciba Specialty Chemicals).

Selbstverständlich können auch Gemische insbesondere der vorstehend genannten Additive eingesetzt werden.

Die Fluoreszenz-Additive werden dem Klebstoff in einer Menge von etwa 0.001 bis etwa 2%, vorzugsweise von etwa 0.001 bis etwa 0.1%, besonders bevorzugt von etwa 0.002% bis etwa 0.01% beigegeben, bezogen auf das Gesamtgewicht des Klebstoffs.

Der Klebstoff kann zum Verbinden von Bauteilen verwendet werden. Insbesondere kann er im erfindungsgemässen Verfahren zum Verbinden und/oder der erfindungsgemässen Vorrichtung eingesetzt werden.

Bevorzugt ist dabei das Additiv des Klebstoffs auf das Verfahren und/oder die Vorrichtung abgestimmt, wie bereits ausgeführt würde. Beispielsweise könnte das Additiv derart ausgewählt sein, dass elektromagnetische Strahlung in einem Wellenlängenbereich absorbierbar ist, welcher einer Anregungsstrahlung entspricht.

Ein weiterer, nicht erfindungsgemässer Aspekt der Offenbarung betrifft eine Holzkonstruktion, insbesondere ein Brettschichtholz, welches mehrere Bauteile umfasst, welche mit dem erfindungsgemässen Klebstoff verbunden sind.

Als weiteren, nicht erfindungsgemässen Aspekt betrifft die Offenbarung ein Verfahren zur Authentifizierung einer Holzkonstruktion, welche mindestens eine Klebstoffverbindung umfasst. Insbesondere kann die Holzkonstruktion eine Klebstoffverbindung mit einem erfindungsgemässen Klebstoff enthalten. Das Verfahren zur Authentifizierung enthält die folgenden Schritte:
a) Detektierung der von der Klebstoffverbindung emittierten Strahlung, insbesondere Detektierung eines Teils des Spektrums der emittierten Strahlung;
b) Vergleich der detektierten Strahlung mit mindestens einem vordefinierten Kriterium.

Dabei kann es sich bei dem vordefinierten Kriterium etwa das Vorliegen der Emission mit einer vordefinierten Intensität in einem festgelegten Wellenlängenbereich handeln.

Das Verfahren ermöglicht es, einen in einer vorgegebenen Holzkonstruktion enthaltenen Klebstoff zu identifizieren. Um etwa zu überprüfen, ob eine Klebstoffverbindung in einer Holzkonstruktion einen Klebstoff mit einem lumineszierenden Additiv enthält, das elektromagnetische Strahlung in einem bestimmten Wellenlängenbereich emittiert, wird gemäss dem Verfahren die von der Klebstoffverbindung emittierte Strahlung detektiert. Wird eine vordefinierte Intensität in dem Wellenlängenbereich überschritten, so dient dies als ein Indiz für das Vorliegen des Additivs und damit für das Vorliegen des Klebstoffs. Die Emission kann als Herkunftsnachweis des Klebstoffs herangezogen werden. In besonders bevorzugten Ausführungsformen wird im Rahmen dieses Aspekts der Offenbarung ein Klebstoff mit einem Gemisch zweier oder mehrerer Lumineszenz-Additive verwendet, um den Herkunftsnachweis komplexer und somit nachahmungssicherer zu machen.

Gemäss einer Weiterentwicklung des Verfahrens zur Authentifizierung wird die Klebstoffverbindung mit einer Anregungsstrahlung bestrahlt. Insbesondere kann die Anregungsstrahlung im UV-Bereich liegen. Dies erweist sich als besonders vorteilhaft, falls das lumineszierende Additiv in einem bestimmten Absorptionswellenlängenbereich Strahlung absorbiert. Bevorzugt ist dabei die Anregungsstrahlung auf diesen Absorptionswellenlängenbereich abgestimmt. Ebenfalls ist es denkbar, dass die Anregungsstrahlung in ihrer Intensität pulsiert. Durch den Vergleich der detektierten Strahlung bei verschiedenen Intensitäten sind äussere Einflüsse noch effektiver korrigierbar.

Details und weitere Vorteile der Erfindung ergeben sich aus den folgenden Ausführungsbeispielen. Es zeigen:
- Fig. 1: eine schematische Skizze eines Ausschnitts einer er- findungsgemässen Vorrichtung 1;
- Fig. 2: eine schematische Skizze derselben Ausschnitts bei Vorliegen einer irregulären Betriebsbedingung;
- Fig. 3: eine perspektivische Darstellung einer Baueinheit 8;
- Fig. 4: eine Holzkonstruktion 10 in Form eines Brettschicht- holzes.

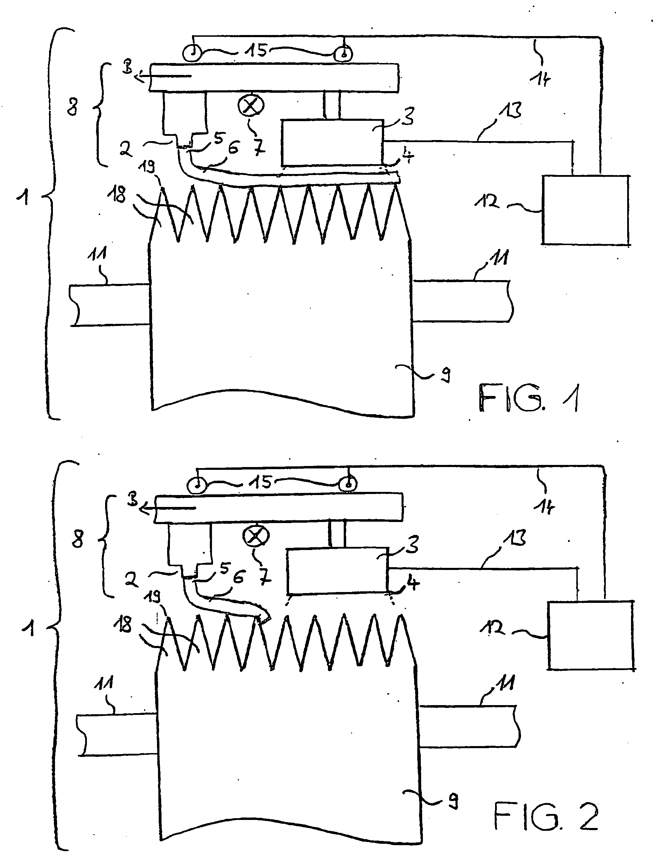

Der in Figur 1 dargestellte Ausschnitt einer erfindungsgemässen Vorrichtung 1 zeigt eine Baueinheit 8 mit einer als Düse ausgebildeten Auftragseinheit 2, einer Photodiode 3 und Leuchtmitteln 7. Die Auftragseinheit 2 trägt berührungslos einen Klebstoff 5 in Form einer Klebstoffraupe 6 auf ein Bauteil 9 auf, welches von Haltemitteln 11 gehalten wird Das Bauteil 9 weist an einer Seite Keilzinken 18 auf, auf deren Oberseiten 19 die Klebstoffraupe 6 abgelegt wird. Die Baueinheit 8 wird durch Transportmittel 15, welche hier nur schematisch durch zwei Führungsrollen angedeutet sind, in der Bewegungsrichtung B bewegt. Alternativ ist es denkbar und liegt im Rahmen der Erfindung, dass das Bauteil 9 bewegt wird. Die Leuchtmittel 7 bestrahlen die Klebstoffraupe 6 mit einer Anregungsstrahlung der Wellenlänge 360 nm. Der Klebstoff 5 enthält ein lumineszierendes Additiv, welches die Anregungsstrahlung absorbiert. Als Klebstoff wird besonders bevorzugt ein feuchtigkeitshärtender 1-Komponenten-Polyurethanklebstoff folgender Zusammensetzung eingesetzt:
- Gemisch von MDI-Präpolymeren mit einem mittleren Molekulargewicht von 400 bis 600 g/Mol: 80-95%, besonders bevorzugt 94%;
- Füllstoffe: 0-15%, besonders bevorzugt 4.2%;
- Rheologiehilfsmittel: 0-3%, besonders bevorzugt 1%;
- Benetzungsmittel: 0-1%, besonders bevorzugt 0.5%;
- Entschäumer: 0-0.3%, besonders bevorzugt 0.2%;
- UV- Additiv: 0.005-0.02%, besonders bevorzugt 0.005%;
- Katalysatoren: 0-2%, besonders bevorzugt 0.1%.

Die Photodiode 3 ist relativ zur Auftragseinheit 2 derart angeordnet, dass im Wesentlichen nur die von der Auftragseinheit 2 aufgetragene und von den Leuchtmitteln 7 bestrahlte Klebstoffraupe 6 in seinem Aufnahmebereich 4 liegt. Im Sinne der Erfindung ist somit die Photodiode 3 der Auftragseinheit 2 zugeordnet. Die Photodiode 3 kann somit die von der Klebstoffraupe 6 und insbesondere dem darin enthaltenen Additiv emittierte Strahlung detektieren. Im vorliegenden Fall emittiert das Additiv Strahlung im Wellenlängenbereich von 200 nm bis 800 nm, vorzugsweise im Wellenlängenbereich von 300 nm bis 650 nm, besonders bevorzugt im Wellenlängenbereich von 410 nm bis 480 nm.

Die Photodiode 3 ist über eine Signalleitung 13 mit einer Steuereinheit 12 verbunden, welche ihrerseits über eine Signalleitung 14 mit den Transportmitteln 15 verbunden ist. Die Funktion dieser Bauelemente wird im Zusammenhang mit Figur 2 erläutert.

Das Vorliegen einer irregulären Betriebsbedingung ist in Figur 2 dargestellt. In diesem Falle liegt an der Auftragseinheit 2 eine Störung vor, so dass Klebstoffraupe 6 teilweise unterbrochen ist. Infolgedessen detektiert die Photodiode 3 nicht mehr die vom Additiv emittierte Strahlung und gibt somit über die Signalleitung 13 ein Fehlersignal an die Steuereinheit 12 aus. Die Steuereinheit 12 sendet sodann über die Steuerleitung 14 ein Steuersignal an die Transportmittel 15, was zur Unterbrechung der Bewegung der Baueinheit 8 und damit zur Unterbrechung des Verfahrens führt.

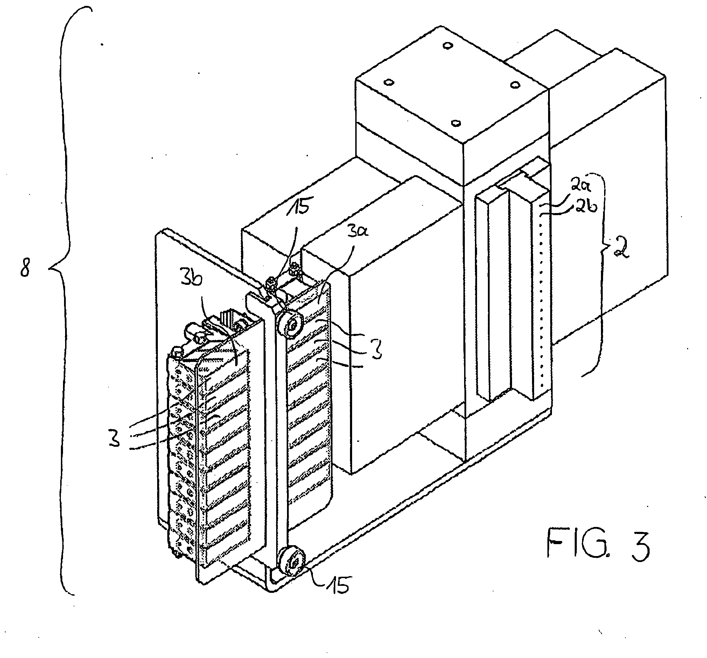

Die in Figur 3 perspektivisch dargestellte Baueinheit 8 umfasst 20 Auftragseinheiten 2 und 20 Photodioden 3. Jede der Photodioden 3 ist also derart angeordnet, dass sie die Strahlung des Additivs einer Klebstoffraupe detektieren kann, welche von jeweils einer der Auftragseinheiten 2 aufgetragen wurde. Im Sinne der Erfindung ist damit jeder der Photodioden 3 einer Auftragseinheit 2 zugeordnet. So ist etwa die Photodiode 3a der Auftragseinheit 2a zugeordnet, die Photodiode 3b ist der Auftragseinheit 2b zugeordnet, etc.

Die Baueinheit 8 ist derart ausgebildet und in der Vorrichtung angeordnet, dass sie im Falle einer Störung durch das erfindungsgemässe Verfahren zum Austausch gegen eine andere Baueinheit 8' austauschbar ist.

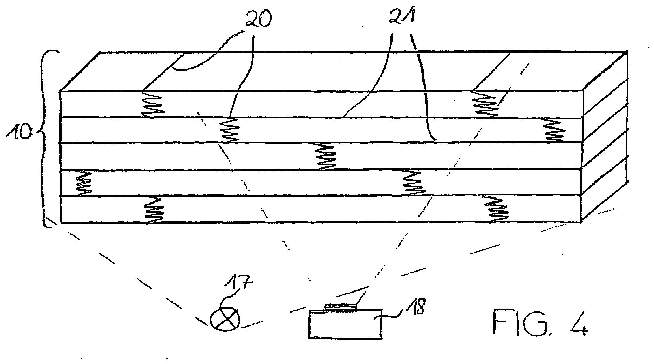

Die Figur 4 zeigt eine Holzkonstruktion 10 in Form eines Brettschichtholzes, welches mehrere Bauteile umfasst, die mittels einer Klebstoffverbindung 20,21 miteinander fest verbunden sind. Dabei sind einige der Klebstoffverbindungen als Keilzinkenverklebung 20 und andere als Flächenverklebung 21 ausgebildet. Mit Hilfe des Verfahrens zur Authentifizierung soll überprüft werden, ob eine Klebstoffverbindung 20,21 einen Klebstoff mit einem lumineszierenden Additiv enthält, das elektromagnetische Strahlung in einem ersten Wellenlängenbereich, vorzugsweise im UV-Bereich, absorbiert und in einem zweiten Wellenlängenbereich, bevorzugt zwischen 200 nm und 800 nm, besonders bevorzugt zwischen 300 nm und 650 nm, ganz besonders bevorzugt zwischen 410 nm und 480 nm, emittiert. Hierzu werden die Klebstoffverbindungen 20,21 mit einer Authentifizierungsleuchte 17 bestrahlt, die eine Anregungsstrahlung im ersten Wellenlängenbereich aussendet. Falls die Klebstoffverbindung einen Klebstoff mit dem Additiv enthält, absorbiert dieses die Anregungsstrahlung und emittiert Licht im zweiten Wellenlängenbereich. Dieses emittierte Licht wird gegebenenfalls von einem Authentifizierungssensor 16 detektiert.

## Patentansprüche

1. Verfahren zum Verbinden mindestens zweier Bauteile (9), insbesondere Holzbauteile, umfassend die folgenden Schritte:
a) Auftragen mindestens einer Klebstoffraupe (6) auf mindestens eines der Bauteile (9) mittels einer Auftragseinheit (2);
b) Überwachung des Auftrags der Klebstoffraupe (6) mittels mindestens einer Photodiode (3), welche der aufgetragenen Klebstoffraupe (6) und/oder der Auftragseinheit (2) zugeordnet ist;
c) Verbinden der Bauteile (9) durch Inkontaktbringen, vorzugsweise Zusammenpressen der Bauteile (9),
**dadurch gekennzeichnet, dass**
ein Klebstoff (5) mit einem lumineszierenden, insbesondere fluoreszierenden Additiv verwendet wird, und dass die Photodiode (3) die vom lumineszierenden, insbesondere fluoreszierenden Additiv emittierte Strahlung detektiert,
wobei bei fehlendem Auftrag ein Fehlersignal ausgegeben wird.

2. Verfahren gemäss Anspruch 1, **dadurch gekennzeichnet, dass** die Klebstoffraupe (6), insbesondere lediglich in einem Aufnahmebereich (4) der Photodiode (3) mit einer Anregungsstrahlung, insbesondere mit UV-Licht bestrahlt wird.

3. Verfahren gemäss Anspruch 2, **dadurch gekennzeichnet, dass** der Aufnahmebereich (4) der Photodiode (3) im Wesentlichen lediglich eine Klebstoffraupe (6) erfasst.

4. Verfahren gemäss einem der vorangehenden Ansprüche, **dadurch gekennzeichnet, dass**
bei Vorliegen des Fehlersignals ein Warnsignal ausgegeben wird und/oder das Verfahren automatisch unterbrochen wird.

5. Vorrichtung (1) zum Auftragen von Klebstoff (5) auf ein Bauteil (9), vorzugsweise einen Holzwerkstoff, insbesondere zur Durchführung eines Verfahrens gemäss einem der Ansprüche 1 bis 4, umfassend
- mindestens eine Auftragseinheit (2) zum Auftragen von Klebstoffraupen (6) auf ein Bauteil (9),
- mindestens eine Photodiode (3) zur Überwachung des Auftrags der Klebstoffraupe (6) auf das Bauteil (9),
- Leuchtmittel (7) zur Bestrahlung der Klebstoffraupen (6), die Strahlung im UV-Bereich emittieren,
**dadurch gekennzeichnet, dass** wenigstens einer Auftragseinheit (2) eine Photodiode (3) zugeordnet ist,
wobei bei fehlendem Auftrag ein Fehlersignal ausgebbar ist.

6. Vorrichtung (1) gemäss Anspruch 5, **dadurch gekennzeichnet, dass** es sich um eine Vorrichtung (1) für das Auftragen von Klebstoff (5) auf Fügeteile und für das Verbinden der Fügeteile, insbesondere um eine Keilzinkenanlage handelt.

7. Vorrichtung (1) gemäss einem der Ansprüche 5 und 6, **dadurch gekennzeichnet, dass** die Vorrichtung (1) aufgrund des Fehlersignal steuerbar ist, insbesondere mindestens eine der Auftragseinheiten (2) automatisch deaktivierbar ist.

8. Verfahren zum Austauschen und/oder Umrüsten einer bestehenden Vorrichtung zum Auftragen von Klebstoff (5) als Klebstoffraupe auf ein Bauteil (9), umfassend das Anbringen mindestens einer Photodiode (3) und eines Leuchtmittels (7), welches Strahlung um UV-Bereich emittiert.

## Claims

1. Method for joining at least two components (9), particularly wooden components, comprising the following steps:
a) at least one bead of adhesive (6) is applied to at least one of the components (9) using an application unit (2);
b) the application of the bead of adhesive (6) is monitored by means of at least one photodiode (3) which is associated with the applied bead of adhesive (6) and/or with the application unit (2);
c) the components (9) are joined by bringing the components (9) into contact, preferably pressing them together,
**characterized in that**
an adhesive (5) with a luminescent, in particular fluorescent, additive is used, and **in that** the photodiode (3) detects the radiation emitted by the luminescent, in particular fluorescent, additive,
wherein an error signal is output in the event of a missing application.

2. Method according to Claim 1, **characterized in that** the bead of adhesive (6) is irradiated, in particular merely in a detection region (4) of the photodiode (3), with an excitation radiation, in particular with UV light.

3. Method according to Claim 2, **characterized in that** the detection region (4) of the photodiode (3) essentially covers merely a bead of adhesive (6).

4. Method according to one of the preceding claims, **characterized in that** the presence of the error signal prompts a warning signal to be output and/or the method to be automatically interrupted.

5. Apparatus (1) for applying adhesive (5) to a component (9), preferably a wooden material, in particular for carrying out a method according to one of Claims 1 to 4, comprising
- at least one application unit (2) for applying beads of adhesive (6) to a component (9),
- at least one photodiode (3) for monitoring the application of the bead of adhesive (6) to the component (9),
- illuminants (7) for irradiating the beads of adhesive (6) which emit radiation in the UV range,
**characterized in that** at least one application unit (2) has an associated photodiode (3),
wherein an error signal can be output in the event of a missing application.

6. Apparatus (1) according to Claim 5, **characterized in that** it is an apparatus (1) for applying adhesive (5) to parts being joined and for joining the parts being joined, in particular is a dovetail system.

7. Apparatus (1) according to one of Claims 5 and 6, **characterized in that** the apparatus (1) can be controlled on the basis of the error signal, in particular at least one of the application units (2) is automatically deactivatable.

8. Method for exchanging and/or modifying an existing apparatus for applying adhesive (5) as a bead of adhesive to a component (9), comprising the attachment of at least one photodiode (3) and of an illuminant (7) which emits radiation in the UV range.

## Revendications

1. Procédé pour relier au moins deux composants (9), en particulier des composants en bois, et comprenant les étapes qui consistent à :
a) au moyen d'une unité d'application (2), appliquer au moins un cordon (6) d'adhésif sur au moins l'un des composants (9),
b) surveiller l'application du cordon (6) d'adhésif au moyen d'au moins une photodiode (3) qui est associée au cordon (6) d'adhésif appliqué et/ou à l'unité d'application (2) et
c) relier les composants (9) en les mettant en contact, de préférence en repoussant les composants (9) l'un contre l'autre,
**caractérisé en ce que** le procédé utilise un adhésif (5) qui contient un additif luminescent et en particulier fluorescent et **en ce que** la photodiode (3) détecte le rayonnement émis par l'additif luminescent et en particulier fluorescent,
un signal d'erreur étant délivré lorsque l'application est absente.

2. Procédé selon la revendication 1, **caractérisé en ce que** le cordon (6) d'adhésif est irradié par un rayonnement d'excitation, en particulier par de la lumière UV, et en particulier uniquement dans une zone de détection (4) de la photodiode (3).

3. Procédé selon la revendication 2, **caractérisé en ce que** la zone de détection (4) de la photodiode (3) ne saisit essentiellement que un cordon (6) d'adhésif.

4. Procédé selon l'une des revendications précédentes, **caractérisé en ce qu'**en cas de présence du signal d'erreur, un signal d'alarme est émis et/ou le procédé est interrompu automatiquement.

5. Dispositif (1) pour appliquer un adhésif (5) sur un composant (9), de préférence un matériau à base de bois, en particulier pour exécuter un procédé selon l'une des revendications 1 à 4, le dispositif comprenant :
- au moins une unité d'application (2) qui applique des cordons (6) d'adhésif sur un composant (9),
- au moins une photodiode (3) qui surveille l'application du cordon (6) d'adhésif sur le composant (9) et
- des moyens d'éclairage (7) qui irradient les cordons (6) d'adhésif et émettent un rayonnement dans la plage des UV,
**caractérisé en ce que** une photodiode (3) est associée à au moins une unité d'application (2),
un signal d'erreur pouvant être délivré lorsque l'application est absente.

6. Dispositif (1) selon la revendication 5, **caractérisé en ce que** le dispositif (1) est un dispositif pour appliquer un adhésif (5) sur des pièces de jonction et pour relier les pièces de jonction, en particulier une installation d'assemblage par dents collées.

7. Dispositif (1) selon l'une des revendications 5 et 6, **caractérisé en ce que** le dispositif (1) peut être commandé sur base du signal d'erreur, et en particulier **en ce qu'**au moins l'une des unités d'application (2) peut être désactivée automatiquement.

8. Procédé de remplacement et/ou de transformation d'un dispositif existant d'application d'adhésif (5) sous la forme d'un cordon d'adhésif sur un composant (9), comprenant l'installation d'au moins une photodiode (3) et d'un moyen d'éclairage (7) qui émet un rayonnement dans la plage des UV.
